# EUROPÄISCHE PATENTSCHRIFT

(11) **EP 3 352 954 B1**
(45) Veröffentlichungstag und Bekanntmachung des Hinweises auf die Patenterteilung: **25.03.2020**
(21) Anmeldenummer: 16763490.6
(22) Anmeldetag: 02.09.2016
(51) Int. Cl.: B25J 15/00, B25J 15/10, B25J 15/08, B25J 15/06

(54) **GREIFVORRICHTUNG**
GRIPPING DEVICE
DISPOSITIF DE PRÉHENSION

(30) Priorität: 25.09.2015 DE 102015218523
(43) Veröffentlichungstag der Anmeldung: 01.08.2018
(73) Patentinhaber: Schunk GmbH & Co. KG Spann- und Greiftechnik, 74348 Lauffen an Neckar (DE)
(72) Erfinder: BECKER, Ralf, 71672 Marbach (DE); WOLFARTH, Jens, 97980 Bad Mergentheim (DE)
(74) Vertreter: DREISS Patentanwälte PartG mbB
(86) Internationale Anmeldenummer: PCT/EP2016/070781
(87) Internationale Veröffentlichungsnummer: WO 2017/050545

(56) Entgegenhaltungen:
- FR-A3- 2 979 564
- US-A- 5 588 794
- US-A1- 2012 059 517

## Beschreibung

Die Erfindung betrifft eine anthropomorphe Greifvorrichtung mit einem Basisteil und mit am Basisteil beweglich angeordneten Greiffingern zum Greifen von Greifbauteilen.

Anthropomorphe Greifvorrichtungen sind einer menschlichen Hand nachgebildet und weisen eine Anordnung von beweglichen Greiffingern auf, die den menschlichen Fingern entsprechen.

Derartige Greifvorrichtungen dienen in erster Linie zum Aufnehmen, Halten, Umsetzen oder Verlagern von Bauteilen. Es hat sich gezeigt, dass es mit vergleichsweise kleinen Greifvorrichtungen schwierig ist, vergleichsweise schwere Bauteile zu greifen. Insbesondere sind dazu vergleichsweise hohe Greifkräfte nötig. Gerade bei anthropomorphen Greifern ist es schwierig, zwischen den Greiffingern Bauteile sicher zu greifen und handzuhaben, die ein gewisses Gewicht aufweisen, deren Schwerpunkt außerhalb einer gedachten Linie zwischen den Greiffingern liegt und/oder auf welche bei der Handhabung höhere oder unvorhersehbare äußere Kräfte wirken. Insbesondere bei anthropomorphen Greifern, die beispielsweise bei Küchenrobotern zum Einsatz kommen, hat sich beispielsweise das Greifen von Pfannen oder Töpfen als problematisch herausgestellt. Auch das Greifen von beispielsweise Brotschneidemessern und deren Verwendung zum Brotschneiden ist problematisch.

Eine weitere anthropomorphe Greifvorrichtung ist aus der US 2012/059517A1 bekannt. Bei dieser Greifvorrichtung weist ein nicht beweglicher Finger an seinem freien Ende einen Saugmechanismus auf, mit dem ein zu greifendes Bauteil zusätzlich durch Ansaugen gehalten werden kann.

Aus der FR 2 979 564 A3 ist eine nicht anthropomorphe Greifvorrichtung bekannt, die eine mittels einer Schraubverbindung befestigte, magnetisierte Scheibe zum Halten eines Bauteils umfasst.

Eine nicht anthropomorphe Greifvorrichtung zum Anheben und verlagern eines Motorblocks ist aus der US 5 588 794 A bekannt.

Der vorliegenden Erfindung liegt die Aufgabe zugrunde, eine anthropomorphe Greifvorrichtung der eingangs genannten Art bereitzustellen, die den genannten Nachteilen Abhilfe leistet.

Diese Aufgabe wird mit einer Greifvorrichtung mit den Merkmalen des Anspruchs 1 gelöst.

Folglich sieht die Greifvorrichtung neben den Greiffingern zusätzlich eine Spanneinrichtung vor, die unabhängig von den Greiffingern betätigbar ist. Mit den Greiffingern können insbesondere Greifbauteile, die sich dadurch auszeichnen, dass sie keine Halteabschnitte zum Zusammenwirken mit der Spanneinrichtung vorsehen, gegriffen werden. Ein derartiges Greifen ist insbesondere für vergleichsweise kleine und leichte Bauteile vorteilhaft. Sollen nun große oder schwere Bauteile gegriffen werden, so reicht die Greifkraft, mit der die Greiffinger gegen das Bauteil beaufschlagt werden, häufig nicht aus. Derartige Bauteile, die dann als Spannbauteile ausgebildet sind, können mit der am Basisteil vorgesehenen Spanneinrichtung am Basisteil fixiert werden und somit gehandhabt werden. Solche Spannbauteile zeichnen sich also dadurch aus, dass sie Halteabschnitte vorsehen, die dafür geeignet sind, mit der am Basisteil vorgesehenen Spanneinrichtung zusammenzuwirken. Je nach handzuhabendem Bauteil kann dieses folglich von der Greifvorrichtung zwischen den Greiffingern gegriffen werden oder mit der Spanneinrichtung am Basisteil fixiert werden.

Eine erfindungsgemäße anthropomorphe Greifvorrichtung kann insbesondere im Zusammenhang mit Servicerobotern Verwendung finden, wie beispielsweise bei Küchenrobotern. Mit derartigen Robotern können Gegenstände, wie Töpfe, Pfannen, Messer oder dergleichen gehandhabt werden, was mittels den Greiffingern nicht bewerkstelligt werden kann.

Die Spanneinrichtung kann dabei insbesondere formschlüssig mit dem Halteabschnitt derart zusammenwirken, dass über die Spanneinrichtung und den Halteabschnitt Kräfte in das Basisteil übertragen werden können.

Dabei ist vorteilhaft, wenn die Spanneinrichtung verlagerbare Verriegelungselemente aufweist, die zur Fixierung des Spannbauteils am Basisteil in einer Verriegelungslage den oder die Halteabschnitte hintergreifen und die zum Lösen des Spannbauteils vom Basisteil in einer Freigabelage den oder die Halteabschnitte freigeben. Durch das Vorsehen solcher Verriegelungselemente kann also eine mechanische Verriegelung des jeweiligen Spannbauteils am Basisteil realisiert werden, mit der insbesondere auch vergleichsweise schwere Spannbauteile sicher mit der Greifvorrichtung gehandhabt werden können.

Dabei ist vorteilhaft, wenn Federelemente vorgesehen sind, die die Verriegelungselemente in die Verriegelungslage bzw. Freigabelage drängen und/oder wenn Antriebsmittel vorgesehen sind, mit denen die Verriegelungselemente in die Freigabelage bzw. Verriegelungslage bewegbar sind. Insbesondere hat sich dabei herausgestellt, dass es vorteilhaft ist, wenn die Verriegelungselemente von den Federelementen in die Verriegelungslage gedrängt werden. Ein Betätigen der Verriegelungselemente in die Freigabelage kann dabei insbesondere mechanisch, elektromagnetisch, pneumatisch und/oder fluidisch erfolgen.

Besonders vorteilhaft ist, wenn die Verriegelungselemente derart ausgebildet sind, dass sie beim Fixieren des Spannbauteils an der Greifvorrichtung zunächst von den Halteabschnitten aus der Verriegelungslage in die Freigabelage gedrängt werden, beispielsweise entgegen der Federkraft der Federelement. Dabei ist vorteilhaft, wenn die Verriegelungselemente bei Erreichen einer Fixierendlage selbsttätig in diese Verriegelungsendlage einrasten oder einschnappen. Dies kann insbesondere durch die Federkraft der Federelemente erfolgen. Beim Einrasten oder Einschnappen können, wie bereits angesprochen, die Verriegelungselemente die spannbauteilseitigen Halteabschnitte vorzugsweise sicher hintergreifen.

Die Spanneinrichtung als solche kann auch als Magnetspanneinrichtung ausgebildet sein. Eine Fixierung der Halteabschnitte am Basisteil kann dann über magnetische Kräfte erfolgen. Dies hat den Vorteil, dass bei der Fixierung des Spannbauteils am Basisteil keine mechanisch bewegbaren Bauteile vorgesehen werden müssen.

Dabei ist vorteilhaft, wenn die magnetischen Kräfte mittels Dauermagneten bereitgestellt werden und wenn zum Lösen des Spannbauteils vom Basisteil die magnetischen Kräfte mittels elektromagnetischer Felder kompensiert werden. Die elektromagnetischen Felder können insbesondere durch im oder am Basisteil vorgesehene Elektromagnete erzeugt werden. Durch entsprechendes Bestromen der Elektromagnete kann folglich das von den Dauermagneten erzeugte Magnetfeld neutralisiert werden, wodurch das Spannbauteil vom Basisteil gelöst werden kann.

Die Spanneinrichtung kann ferner als Saugspanneinrichtung ausgebildet sein, wobei eine Fixierung der Halteabschnitte über durch Unter- oder Überdruck bereitgestellte Kräfte erfolgt. Insbesondere ist denkbar, dass zur Fixierung des Spannbauteils dieses mittels Unterdruck am Basisteil gehalten wird.

Ferner ist denkbar, dass die Spanneinrichtung als Bajonettspanneinrichtung ausgebildet ist, bei der zum Spannen die Halteabschnitte zunächst entlang einer geraden Linie, die vorzugsweise orthogonal zur Oberfläche des die Spanneinrichtung aufweisenden Abschnitts des Basisteils verläuft, und dann um eine Drehachse in eine Verriegelungslage bewegt werden.

Die Spanneinrichtung als solche kann insbesondere eine Spannaufnahme zur Aufnahme eines am zu fixierenden Bauteil vorgesehenen, den Halteabschnitt aufweisenden, Spannüberstand aufweisen. Der Spannüberstand wird dann zur Fixierung des Spannbauteils in die Spannaufnahme eingeführt und dort verriegelt. Die Verriegelung kann dabei insbesondere, wie ausgeführt, über Verriegelungselemente erfolgen. Eine Verriegelung ist allerdings auch insbesondere magnetisch oder pneumatisch möglich.

Andererseits ist denkbar, dass die Spanneinrichtung einen Spannüberstand zum Eingreifen in eine am zu fixierenden Spannbauteil vorgesehene Spannaufnahme aufweist. Dies ist insbesondere dann vorteilhaft, wenn die Spannbauteile keinen Überstand vorsehen sollen, um beispielsweise auch manuell gehandhabt werden zu können. Der Spannüberstand, mit beispielsweise vorzusehenden Verriegelungselementen, ist dann am Basisteil angeordnet.

Die eingangs genannte Aufgabe wird auch gelöst durch ein Greifsystem, das eine erfindungsgemäße Greifvorrichtung und ein zugehöriges Spannbauteil umfasst, wobei das Spannbauteil mit der Spanneinrichtung zusammenwirkende Halteabschnitte aufweist. Das System zeichnet sich also dadurch aus, dass die Spannbauteile durch Vorsehen entsprechender Halteabschnitte sicher an der Greifvorrichtung fixiert und an dieser gehandhabt werden können.

Weitere Einzelheiten und vorteilhafte Ausgestaltungen der Erfindung sind der nachfolgenden Beschreibung zu entnehmen, anhand derer verschiedene Ausführungsformen der Erfindung näher beschrieben und erläutert sind.

Es zeigen:
- Figur 1 und Figur 2: verschiedene Ansichten einer erfindungsgemäßen Greifvorrichtung,
- Figur 3: ein Spannbauteil,
- Figur 4: einen Ausschnitt durch einen Schnitt des in Figur 3 gezeigten Spannbauteils in Fixierendlage,
- Figur 5: eine zweite erfindungsgemäße Greifvorrichtung mit Spannbauteil,
- Figur 6: die Greifvorrichtung gemäß Figur 5 mit fixiertem Spannbauteil, und
- Figur 7: ein Spannbauteil in Form eines Küchenmessers.

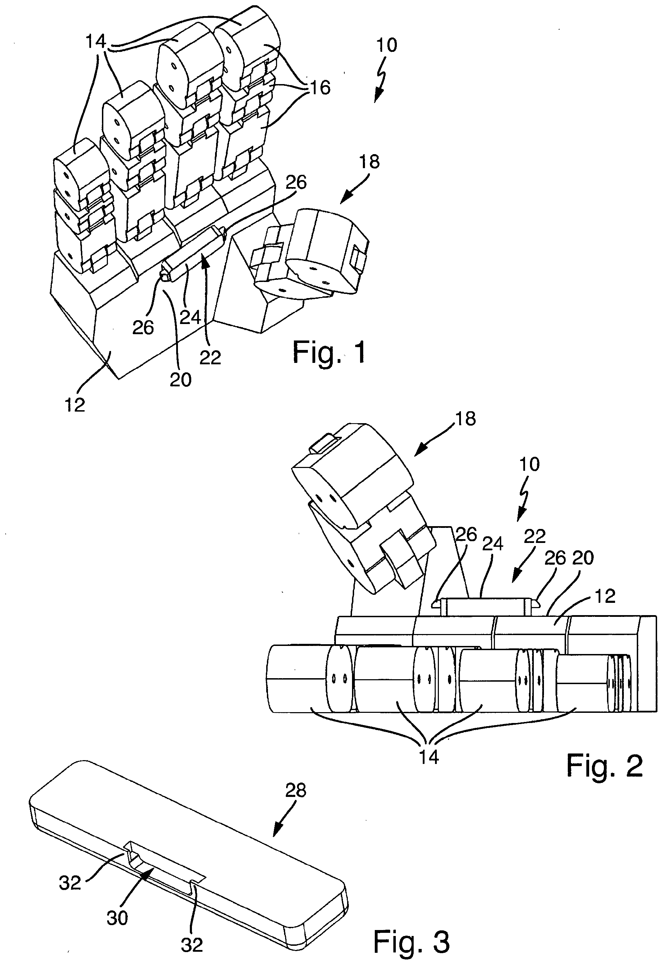

Die in den Figuren 1 und 2 gezeigte Greifvorrichtung 10 ist als anthropomorpher Greifer ausgebildet, der einer menschlichen Hand nachempfunden ist. An einem Basisteil 12 sind insgesamt vier parallel zueinander verlaufende Greiffinger 14 vorgesehen, die jeweils drei beweglich zueinander angeordnete Fingerglieder 16 aufweisen. Zudem ist am Basisteil 12 ein weiterer Greiffinger 18 vorgesehen, der dem menschlichen Daumen entsprechen soll.

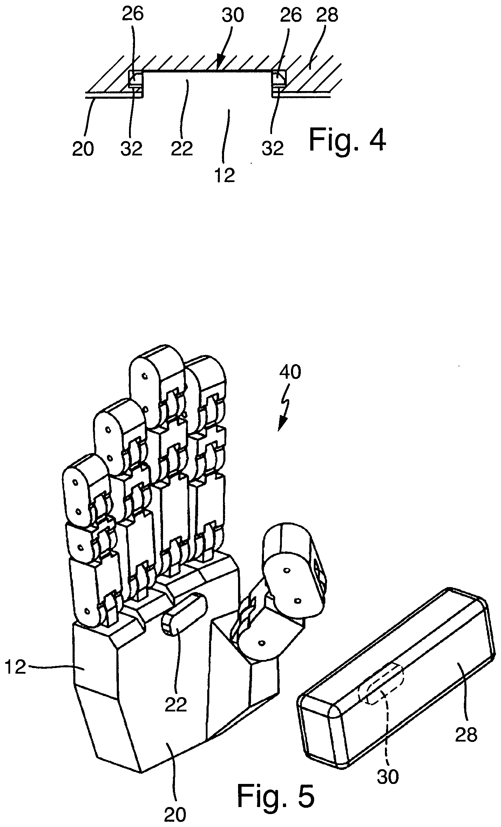

Das Basisteil 12 weist auf der Seite, an der der Greiffinger 18 am Basisteil 12 vorgesehen ist, einen Handflächenabschnitt 20 auf. Wie aus Figur 1 und 2 deutlich wird, ist am Handflächenabschnitt 20 eine Spanneinrichtung 22 vorgesehen. Die Spanneinrichtung 22 ist als Spannüberstand ausgebildet, d.h. sie ist auf dem Handflächenabschnitt 20 vorgesehen und überragt diesen. Die Spanneinrichtung 22 umfasst dabei ein quaderförmiges Gehäuse 24, in dem zwei aufeinander zu und voneinander weg verlagerbare Verriegelungselemente 26 vorgesehen sind. Im Gehäuse 24 sind dabei Federelemente vorgesehen, die die Verriegelungselemente 26 nach axial außen voneinander wegdrängen. Die Verriegelungselemente 26 können folglich entgegen der Federkraft dieser Federelemente aufeinander zu bewegt werden. Ferner sind nicht dargestellte Antriebsmittel vorgesehen, mit denen die Verriegelungselemente aus der in den Figuren 1 und 2 gezeigten Verriegelungslage in eine Freigabelage bewegt werden können, in welcher die Verriegelungselemente aufeinander zu in das Gehäuse 24 einrücken. Die Antriebsmittel können beispielsweise elektrisch, mechanisch, pneumatisch oder fluidisch betätigbar sein. In Figur 3 ist nun ein Spannbauteil 28 gezeigt, welches mit der Greifvorrichtung 10 gehandhabt werden soll. Dieses Spannbauteil 28 weist einen Halteabschnitt 30 in Form einer Spannaufnahme auf, welcher dazu vorgesehen ist, mit der Spanneinrichtung 22 zusammenzuwirken. Der Halteabschnitt 30 umfasst zwei Hintergriffsabschnitte 32, die im am Basisteil 12 fixierten Zustand von den Verriegelungselementen 26, wie in Figur 4 gezeigt, hintergriffen werden.

Die Verriegelungselemente 26 sind dabei auf der dem Handflächenabschnitt 20 abgewandten Oberseite derart keilartig ausgebildet, dass sie beim Bewegen der Greifvorrichtung 10 bzw. der Spanneinrichtung 22 in den Halteabschnitt 30 entgegen der Federkraft der Federelemente aus der in Figur 1 und 2 gezeigten Verriegelungslage aufeinander zu in eine Freigabelage gedrängt werden, und dass sie beim Erreichen der in Figur 4 gezeigten Fixierendlage in die Verriegelungslage aufgrund der Federvorspannung selbsttätig einrasten. Damit ist das Spannbauteil 28 sicher am Basisteil 12 fixiert.

Zum Lösen des Spannbauteils 28 können, wie bereits angesprochen, die Verriegelungselemente 26 durch die Antriebsmittel aufeinander zu bewegt werden, wodurch sie in das Gehäuse 24 einrücken. Damit kann die Spanneinrichtung 22 aus dem Halteabschnitt 30 herausbewegt werden.

Aufgrund der quaderförmigen Ausbildung der Spanneinrichtung 22 und der entsprechend komplementären Ausbildung des Halteabschnitts 30, entsteht zwischen der Spanneinrichtung und dem Halteabschnitt ein Formschluss. Dadurch können insbesondere Querkräfte und Momente sicher vom zu greifenden Bauteil in das Basisteil abgeleitet werden.

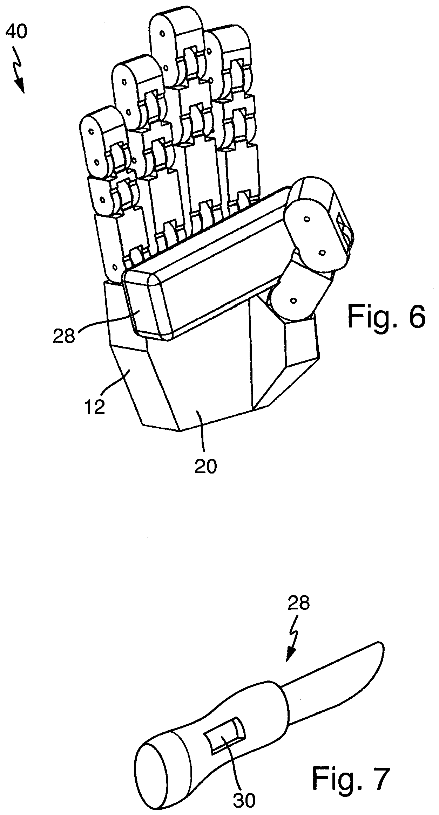

Die in den Figuren 5 und 6 gezeigte Greifvorrichtung 40 entspricht der Greifvorrichtung 10, wobei entsprechende Bauteile mit entsprechenden Bezugszeichen gekennzeichnet sind. Im Unterschied zur Greifvorrichtung 10 ist bei Greifvorrichtung 40 die Spanneinrichtung 22 als Magnetspanneinrichtung ausgebildet. Die Spanneinrichtung 22 umfasst dort einen vergleichsweise starken Permanentmagneten, der mit einem am Spannbauteil 28 vorgesehenen ferromagnetischen Halteabschnitt 30 zusammenwirkt. Zur Fixierung des Spannbauteils 28 am Basisteil 12 rückt folglich die Spanneinrichtung 22 in den als Spannaufnahme ausgebildeten Halteabschnitt 30 ein. Die Fixierung des Spannbauteils 28 erfolgt dann über magnetische Kräfte. Zum Lösen der Fixierung ist denkbar, dass in der Spanneinrichtung 22 oder im Basisteil 12 Elektromagnete vorgesehen sind, mit denen elektromagnetische Felder erzeugt werden können, die die magnetischen Kräfte, mit denen das Spannbauteil 28 an dem Basisteil 12 fixiert wird, kompensieren bzw. neutralisieren. Das Spannbauteil 28 kann dann von der Greifvorrichtung 10 gelöst werden.

In Figur 7 ist ein Spannbauteil 28 dargestellt, das als Messer ausgebildet ist. Deutlich zu erkennen ist der Halteabschnitt 30, der je nach Ausführungsform, entweder mit der Greifvorrichtung 10 oder der Greifvorrichtung 40 zur Fixierung des Spannbauteils 28 zusammenwirkt.

Die Greifvorrichtungen 10 und 40 haben den Vorteil, dass mit ihnen nicht nur kleine und leichte Bauteile gegriffen werden können, sondern es können auch Bauteile, die vergleichsweise schwer oder sperrig sind, sicher an der Greifvorrichtung mittels den Spanneinrichtungen 22 fixiert werden können.

## Patentansprüche

1. Anthropomorphe Greifvorrichtung (10, 40) mit einem einen Handflächenabschnitt (20) aufweisenden Basisteil (12) und mit am Basisteil (12) beweglich angeordneten Greiffingern (14) zum Greifen von Greifbauteilen, wobei die Greiffinger (14) jeweils aus einem oder mehreren Fingergliedern (16) gebildet sind, wobei im oder am Handflächenabschnitt (20) zusätzlich eine im Betrieb der Greifvorrichtung (10, 40, 50) unabhängig von den Greiffingern betätigbare Spanneinrichtung (22) mit verlagerbaren Verriegelungselementen (26) vorgesehen ist, die mit wenigstens einem an einem Spannbauteil (28) vorgesehenen Halteabschnitt (30) zur Fixierung des Spannbauteils (28) am Basisteil (12) zusammenwirkt,
wobei die Verriegelungselemente (26) derart ausgebildet sind, dass in einer Verriegelungslage das Spannbauteil (28) gegen den Handflächenabschnitt (20) beaufschlagt wird, wobei der Handflächenabschnitt (20) eine Anlagefläche vorsieht, an welcher das am Handflächenabschnitt (20) fixierte Spannbauteil (28) zur Anlage kommt, so dass je nach handzuhabendem Bauteil dieses zwischen den Greiffingern gegriffen oder mit der Spanneinrichtung am Handflächenabschnitt (20) fixiert werden kann.

2. Greifvorrichtung (10, 40), nach Anspruch 1, **dadurch gekennzeichnet, dass** die Spanneinrichtung (22) verlagerbare Verrieglungselemente (26) aufweist, die zur Fixierung des Spannbauteils (28) am Basisteil (12) in einer Verriegelungslage den Halteabschnitt (30, 32) hintergreifen und die zum Lösen des Spannbauteils (28) vom Basisteil (12) in einer Freigabelage den Halteabschnitt (30, 32) freigeben.

3. Greifvorrichtung (10) nach Anspruch 1 oder 2, **dadurch gekennzeichnet, dass** Federelemente (64) vorgesehen sind, die die Verrieglungselemente (26) in die Verrieglungslage bzw. Freigabelage drängen und/oder dass Antriebsmittel vorgesehen sind, mit denen die Verrieglungselemente (26) in die Freigabelage bzw. Verrieglungslage bewegbar sind.

4. Greifvorrichtung (10) nach Anspruch 1, 2 oder 3, **dadurch gekennzeichnet, dass** die Verriegelungselemente (26) derart ausgebildet sind, dass sie beim Fixieren des Spannbauteils (28) an der Greifvorrichtung (10) zunächst von dem Halteabschnitt (30, 32) aus der Verrieglungslage in die Freigabelage gedrängt werden und dass sie dann beim Erreichen einer Fixierendlage in die Verriegelungslage einrasten oder einschnappen.

5. Greifvorrichtung (40) nach einem der vorhergehenden Ansprüche, **dadurch gekennzeichnet, dass** die Spanneinrichtung (22) als Magnetspanneinrichtung ausgebildet ist, wobei eine Fixierung des Halteabschnitts am Basisteil über magnetische Kräfte erfolgt.

6. Greifvorrichtung (40) nach Anspruch 5, **dadurch gekennzeichnet, dass** die magnetischen Kräfte mittels Dauermagneten bereitgestellt werden und dass zum Lösen des Spannbauteils (28) vom Basisteil (12) die magnetischen Kräfte mittels elektromagnetischer Felder kompensiert werden.

7. Greifvorrichtung nach einem der vorhergehenden Ansprüche, **dadurch gekennzeichnet, dass** die Spanneinrichtung als Saugspanneinrichtung ausgebildet ist, wobei eine Fixierung des Halteabschnitts über durch Unter- oder Überdruck bereitgestellte Kräfte erfolgt.

8. Greifvorrichtung nach einem der vorhergehenden Ansprüche, **dadurch gekennzeichnet, dass** die Spanneinrichtung als Bajonettspanneinrichtung ausgebildet ist, bei der zum Spannen der Halteabschnitte zunächst entlang einer geraden Linie und dann um eine Drehachse in eine Verriegelungslage bewegt wird.

9. Greifvorrichtung (50) nach einem der vorhergehenden Ansprüche, **dadurch gekennzeichnet, dass** die Spanneinrichtung (54) eine Spannaufnahme (56) zur Aufnahme eines am Spannbauteil (28) vorgesehenen Spannüberstands (58) aufweist.

10. Greifvorrichtung (10, 40) nach einem der vorhergehenden Ansprüche, **dadurch gekennzeichnet, dass** die Spanneinrichtung (22) einen Spannüberstand (24) zum Eingreifen in eine am Spannbauteil (28) vorgesehene Spannaufnahme (30) aufweist.

11. Greifvorrichtung (10, 40) nach einem der vorhergehenden Ansprüche, **dadurch gekennzeichnet, dass** Spanneinrichtung (22) formschlüssig mit dem Halteabschnitt (30) derart zusammenwirken, dass über die Spanneinrichtung (22) und den Halteabschnitt (30) Kräfte und Momente in das Basisteil übertragen werden können.

12. Greifsystem umfassend eine Greifvorrichtung (10, 40) nach einem der vorhergehenden Ansprüche und ein Spannbauteil (28), wobei das Spannbauteil (28) wenigstens einen mit der Spanneinrichtung zusammenwirkenden Halteabschnitt (30, 32) aufweist.

## Claims

1. Anthropomorphic gripping device (10, 40) comprising a base part (12),
which has a palm portion (20), and gripping fingers (14) for gripping gripping components, which gripping fingers are movably arranged on the base part (12), wherein the gripping fingers (14) each consist of one or more finger elements (16), wherein a clamping device (22) is additionally provided in or on the palm portion (20), which clamping device has movable locking elements (26), can be actuated independently of the gripping fingers during operation of the gripping device (10, 40) and interacts with at least one holding segment (30) provided on a clamping component (28) in order to fasten the clamping component (28) to the base part (12), wherein the locking elements (26) are designed such that the clamping component (28) is loaded against the palm portion (20) in the locking position, wherein the palm portion (20) comprises a contact surface on which the clamping component (28) fastened to the palm portion (20) can come to rest, so that, depending on the component which is to be handled, said component can be gripped between the gripping fingers or fastened to the palm portion (20) by means of the clamping device.

2. Gripping device (10, 40) according to claim 1, **characterized in that** the clamping device (22) comprises movable locking elements (26) which latch onto the holding segment (30, 32) in a locking position in order to fasten the clamping component (28) to the base part (12), and which release the holding segment (30, 32) in a release position in order to detach the clamping component (28) from the base part (12).

3. Gripping device (10) according to claim 1 or claim 2, **characterized in that** spring elements (64) are provided which force the locking elements (26) into the locking position or the release position and/or **in that** drive means are provided which can move the locking elements (26) into the release position or the locking position.

4. Gripping device (10) according to claim 1, 2 or 3, **characterized in that** the locking elements (26) are designed such that said locking elements are first forced out of the locking position into the release position by the holding segment (30, 32) when the clamping component (28) is fastened to the gripping device (10), and **in that** said locking elements then snap or click into the locking position when a fastening end position is reached.

5. Gripping device (40) according to any of the preceding claims, **characterized in that** the clamping device (22) is designed as a magnetic clamping device, the fastening of the holding segment to the base part being carried out by means of magnetic forces.

6. Gripping device (40) according to claim 5, **characterized in that** the magnetic forces are provided by permanent magnets, and **in that** the magnetic forces are compensated by electromagnetic fields in order to detach the clamping component (28) from the base part (12).

7. Gripping device according to any of the preceding claims, **characterized in that** the clamping device is designed as a suction clamping device, the fastening of the holding segment being carried out by means of forces provided by negative or positive pressure.

8. Gripping device according to any of the preceding claims, **characterized in that** the clamping device is designed as a bayonet clamping device in which, in order to carry out the clamping process, the holding segment is moved first along a straight line and then about a rotational axis into a locking position.

9. Gripping device (50) according to any of the preceding claims, **characterized in that** the clamping device (54) comprises a clamping receptacle (56) for receiving a clamping projection (58) provided on the clamping component (28).

10. Gripping device (10, 40) according to any of the preceding claims, **characterized in that** the clamping device (22) comprises a clamping projection (24) for engaging in a clamping receptacle (30) provided on the clamping component (28).

11. Gripping device (10, 40) according to any of the preceding claims, **characterized in that** the clamping device (22) interacts with the holding segment (30) in a positively engaging manner, such that forces and moments can be conveyed to the base part by means of the clamping device (22) and the holding segment (30).

12. Gripping system comprising a gripping device (10, 40) according to any of the preceding claims and a clamping component (28), wherein the clamping component (28) comprises at least one holding segment (30, 32) which interacts with the clamping device.

## Revendications

1. Dispositif de préhension anthropomorphe (10, 40) comprenant une partie de base (12), qui présente une partie de paume (20), et des doigts de préhension (14) pour la saisie de composants de préhension, lesquels doigts de préhension sont disposés de manière mobile sur la partie de base (12), dans lequel les doigts de préhension (14) se composent chacun d'un ou plusieurs éléments de doigt (16), dans lequel un dispositif de serrage (22) est en outre prévu dans ou sur la partie de paume (20), lequel dispositif de serrage présente des éléments de verrouillage mobiles (26), qui peuvent être actionnés indépendamment des doigts de préhension pendant le fonctionnement du dispositif de préhension (10, 40) et qui coopère avec au moins un segment de maintien (30) prévu sur un élément de serrage (28) pour fixer l'élément de serrage (28) à la partie de base (12), les éléments de verrouillage (26) étant conçus de telle sorte que l'élément de serrage (28) est chargé contre la partie de paume (20) dans la position de verrouillage, dans lequel la partie de paume (20) comprend une surface de contact sur laquelle le l'élément de serrage (28) fixé à la partie de paume (20) peut venir reposer, de sorte que, selon le composant qui doit être manipulé, ledit composant peut être saisi entre les doigts de saisie ou fixé à la partie de paume (20) au moyen du dispositif de serrage.

2. Dispositif de serrage (10, 40) selon la revendication 1, **caractérisé en ce que** le dispositif de serrage (22) comprend des éléments de verrouillage mobiles (26) qui s'enclenchent sur le segment de maintien (30, 32) dans une position de verrouillage afin de fixer l'élément de serrage (28) à la partie de base (12), et qui libèrent le segment de maintien (30, 32) dans une position de libération afin de détacher l'élément de serrage (28) de la partie de base (12).

3. Dispositif de préhension (10) selon la revendication 1 ou la revendication 2, **caractérisé en ce que** des éléments à ressort (64) sont prévus qui forcent les éléments de verrouillage (26) dans la position de blocage ou la position de libération et/ou **en ce que** des moyens d'entra nement sont prévus qui peuvent déplacer les éléments de verrouillage (26) dans la position de libération ou la position de blocage.

4. Dispositif de préhension (10) selon la revendication 1, 2 ou 3, **caractérisé en ce que** les éléments de verrouillage (26) sont conçus de telle sorte qu'ils sont d'abord poussés par le segment de maintien (30, 32) de la position de verrouillage dans la position de libération lorsque l'élément de serrage (28) est fixée au dispositif de préhension (10), et **en ce qu'**ensuite, lorsqu'une position finale de fixation est atteinte, ils s'enclenchent ou s'encliquètent dans la position de verrouillage.

5. Dispositif de préhension (40) selon l'une des revendications précédentes, **caractérisé en ce que** le dispositif de serrage (22) est conçu comme un dispositif de serrage magnétique, la fixation du segment de maintien sur la pièce de base étant effectuée au moyen de forces magnétiques.

6. Dispositif de préhension (40) selon la revendication 5, **caractérisé en ce que** les forces magnétiques sont fournies par des aimants permanents, et **en ce que** les forces magnétiques sont compensées par des champs électromagnétiques afin de détacher l'élément de serrage (28) de la partie de base (12).

7. Dispositif de préhension selon l'une des revendications précédentes, **caractérisé en ce que** le dispositif de serrage est conçu comme un dispositif de serrage par aspiration, la fixation du segment de maintien étant effectuée au moyen de forces fournies par une pression négative ou positive.

8. Dispositif de préhension selon l'une des revendications précédentes, **caractérisé en ce que** le dispositif de serrage est conçu comme un dispositif de serrage à baïonnette dans lequel, pour effectuer le processus de serrage, le segment de maintien est d'abord déplacé le long d'une ligne droite et ensuite autour d'un axe de rotation dans une position de verrouillage.

9. Dispositif de préhension (50) selon l'une des revendications précédentes, **caractérisé en ce que** le dispositif de serrage (54) comprend un réceptacle de serrage (56) pour recevoir une saillie de serrage (58) prévue sur l'élément de serrage (28).

10. Dispositif de préhension (10, 40) selon l'une des revendications précédentes, **caractérisé en ce que** le dispositif de serrage (22) comprend une saillie de serrage (24) pour s'engager dans un réceptacle de maintien (30) prévu sur l'élément de serrage (28).

11. Dispositif de préhension (10, 40) selon l'une des revendications précédentes, **caractérisé en ce que** le dispositif de serrage (22) coopère avec le segment de maintien (30) par engagement positif, de sorte que des forces et des moments peuvent être transmis à la partie de base au moyen du dispositif de serrage (22) et du segment de maintien (30).

12. Système de préhension comprenant un dispositif de préhension (10, 40) selon l'une des revendications précédentes et l'élément de serrage (28), dans lequel le l'élément de serrage (28) comprend au moins un segment de maintien (30, 32) qui interagit avec le dispositif de serrage.
